(19) Europäisches Patentamt
European Patent Office
Office européen des brevets

(11) **EP 3 070 972 B1**

(12) **EUROPEAN PATENT SPECIFICATION**

(45) Date of publication and mention
of the grant of the patent:
**28.02.2018 Bulletin 2018/09**

(51) Int Cl.:
***H04W 24/02*** (2009.01)

(21) Application number: **15196618.1**

(22) Date of filing: **26.11.2015**

(54) **DETERMINING RADIO COVERAGE IN WIRELESS COMMUNICATION NETWORKS**

BESTIMMUNG DER FUNKABDECKUNG IN DRAHTLOSKOMMUNIKATIONSNETZWERKEN

DÉTERMINATION D'UNE COUVERTURE RADIO DANS DES RÉSEAUX DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 IN 1203CH2015**
**23.06.2015 US 201514748182**

(43) Date of publication of application:
**21.09.2016 Bulletin 2016/38**

(73) Proprietor: **Wipro Limited**
**560 035 Karnataka (IN)**

(72) Inventors:
• **CHAUDHURI, Saptarshi**
**560068 Karnataka (IN)**
• **MANNA, Avijit**
**700039 West Bengal (IN)**
• **PAL, Shyam Sundar**
**700039 West Bengal (IN)**

(74) Representative: **Finnegan Europe LLP**
**16 Old Bailey**
**London EC4M 7EG (GB)**

(56) References cited:
**EP-A1- 2 701 420        GB-A- 2 406 472**
**US-A1- 2014 036 656**

## Description

Technical Field

This disclosure relates generally to wireless communication networks, and more particularly to methods and systems for determining radio coverage in wireless communication networks.

Background

In a Long Term Evolution (LTE) network, automatic optimization of the wireless network to reduce operating cost is comparatively complex when compared to other wireless networks. The complexity is because of considerations of multiple network and geographical parameters. Initially, a primary focus in the implementation of LTE networks was on the radio coverage. However, with the increase in the number of subscribers and corresponding increase in demand of service, it has become a challenge to increase the capacity of an LTE network to desired levels without compromising the quality of service.

To address this problem, some methods and systems employ a motor vehicle equipped with network measurement devices to measure different network parameters within different parts of the coverage area. These parameters so captured are used to optimize the coverage area in the LTE network. However, not only is this method cost intensive but it can also be highly inaccurate and unreliable. Therefore, there is a need for a method and system that can more efficiently and effectively determine the radio coverage in LTE networks.

GB 2 406 472 relates to a method for estimating cell coverage in a mobile telecommunications network. Signal quality and position information is received from the users of the network, and used to calculate a coverage map. The cell is divided into a regular grid of sub-cells, and the position information is given relative to this grid.

## SUMMARY

In accordance with the invention, there is provided: a method for determining radio coverage in a wireless communication network as recited by claim 1; a Base Station for a wireless communication network as recited by claim 14; and a non-transitory computer-readable storage medium as recited by claim 15.

In one embodiment, a method for determining radio coverage in a wireless communication network is disclosed. The method includes categorizing each of a plurality of micro zones within a coverage area of a Base Station (BS) as one of a User Equipment (UE) micro zone and a blind micro zone based on signal measurement reports associated with the plurality of micro zones. The method further includes estimating signal quality of a blind micro zone within the plurality of micro zones based on signal quality of at least one set of neighboring micro zones surrounding the blind micro zone. The signal quality of each set of neighboring micro zones is determined based on a predefined set of signal parameters extracted from corresponding signal measurement reports.

In a further example, a system for determining radio coverage in a wireless communication network is disclosed. The system includes a processor configured to categorize each of a plurality of micro zones within a coverage area of a BS as one of a UE micro zone and a blind micro zone based on signal measurement reports associated with the plurality of micro zones. The processor is further configured to estimate signal quality of a blind micro zone within the plurality of micro zones based on signal quality of at least one set of neighboring micro zones surrounding the blind micro zone. The signal quality of each set of neighboring micro zones is determined based on a predefined set of signal parameters extracted from corresponding signal measurement reports.

The processor may be further configured to identify the plurality of micro zones of equal size based on transmission power of the BS and the number of sectors within the coverage area of the BS, wherein the plurality of micro zones tessellate to overlay at least a portion of the coverage area of the BS.

The processor may be further configured to determine signal quality of a UE micro zone within the plurality of micro zones based on the predefined set of signal parameters extracted from a predefined threshold number of signal measurement reports received from the UE micro zone.

The processor may be further configured to collect signal measurement reports for a micro zone from at least one UE in the micro zone; and compute the predefined set of signal parameters for the micro zone based on the signal measurement reports of the micro zone and at least one configuration parameter.

The processor may be further configured to determine the at least one configuration parameter, the at least one configuration parameter being selected from a group comprising threshold number of signal measurement reports, time duration for collecting signal measurement reports, transmission power of the BS, size of a micro zone, signal quality factor of a micro zone, good quality micro zone threshold, bad quality micro zone threshold, distance factor of a micro zone, and the number of sectors in the coverage area of the BS.

The processor may be further configured to categorize the UE micro zone as one of good quality micro zone, medium quality micro zone, and bad quality micro zone based on comparison of signal quality of the UE micro zone with good quality micro zone threshold and bad quality micro zone threshold.

The processor may be further configured to determine a signal quality factor for a set of neighboring micro zones based on (i) average RLF and average HF of the set of neighboring micro zones, and (ii) comparison of signal quality deviation between actual signal quality of a UE micro zone associated with maximum number of signal measurement reports within the set of neighboring micro zones and an average estimated signal quality of the set of neighboring micro zones with threshold deviation of the BS, the threshold deviation being determined based on signal strength of the BS.

The processor may be further configured to predict signal quality of the blind micro zone, the processor being further configured to: compute an average signal quality of the at least one set of neighboring micro zones based on (i) average RLF of a sector comprising the at least one set of neighboring micro zones, (ii) each of average signal strength, average RLF, and average HF of the at least one set of neighboring micro zones, and (iii) a signal quality factor determined for each of the at least one set of neighboring micro zones; and categorize the blind zone as one of good quality micro zone, medium quality micro zone, and bad quality micro zone based on the average signal quality of the at least one set of neighboring micro zones, distance of the blind zone from the BS, good quality micro zone threshold, and bad quality micro zone threshold.

The processor may be further configured to verify the signal quality predicted for the blind zone with threshold limit of signal error deviation.

The processor may be further configured to perform a signal adjustment for the blind micro zone, when the signal quality predicted for the blind micro zone is outside the threshold limit of signal error deviation.

The processor may be further configured to create a radio coverage map for the coverage area of the BS based on the signal quality determined for the UE micro zone and the signal quality estimated for the blind micro zone.

In yet another embodiment, a non-transitory computer-readable storage medium for determining radio coverage in a wireless communication network is disclosed, such that when executed by a computing device, the non-transitory computer-readable storage medium causes the computing device to categorize each of a plurality of micro zones within a coverage area of a BS as one of a UE micro zone and a blind micro zone based on signal measurement reports associated with the plurality of micro zones; and estimate signal quality of a blind micro zone within the plurality of micro zones based on signal quality of at least one set of neighboring micro zones surrounding the blind micro zone, wherein the signal quality of each set of neighboring micro zones is determined based on a predefined set of signal parameters extracted from corresponding signal measurement reports.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

FIG. 1 illustrates an exemplary wireless communication network in which various embodiments may function.

FIG. 2 is a block diagram illustrating communication of various components of network coverage module with a management application and a control application in a Base Station (BS), in accordance with an embodiment.

FIG. 3 illustrates a portion of coverage area of a BS divided into micro zones and macro zones, in accordance with an exemplary embodiment.

FIG. 4 illustrates a flowchart of a method for determining radio coverage in a wireless communication network, in accordance with an embodiment

FIG. 5 illustrates a flowchart of a method for determining radio coverage in a wireless communication network, in accordance with another embodiment.

FIG. 6 illustrates a flowchart of a method for estimating signal quality of a blind micro zone, in accordance with an embodiment.

FIG. 7 illustrates an exemplary computing system that may be employed to implement processing functionality for various embodiments.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

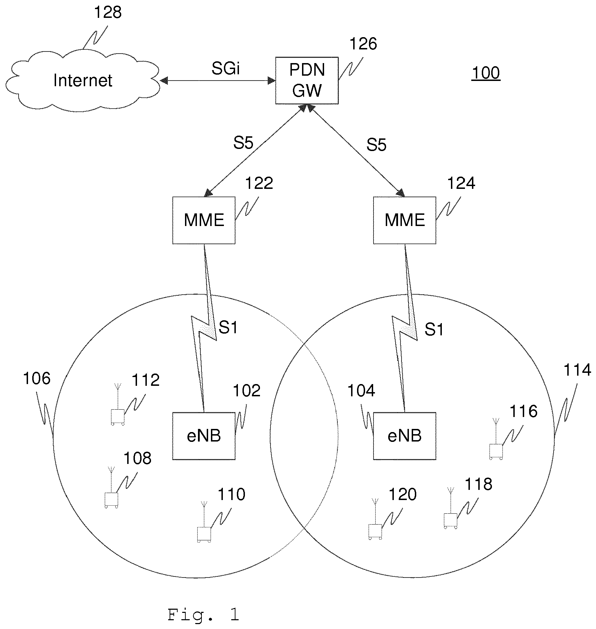

Additional illustrative embodiments are listed below. In one embodiment, an exemplary wireless communication network 100 in which various embodiments may function is illustrated in FIG. 1. Wireless communication network 100 is a Long Term Evolution (LTE) network that includes an Evolved Node Base station (eNB) 102 and an eNB 104. eNB 102 has a coverage area 106 and communicates wirelessly with a User Equipment (UE) 108, a UE 110, and a UE 112 within coverage area 106. eNB 104 has a coverage area 114 and communicates wirelessly with UE 116, UE 118, and UE 120 within coverage area 114. Examples of a UE may include but are not limited to a cell phone, a smart phone, a tablet, a phablet, and a laptop. eNB 102 and eNB 104 form the evolved Universal Mobile Telecommunications System (UMTS) Terrestrial Radio Access Network (E-UTRAN) for the wireless communication network 100.

The eNB 102 wirelessly communicates with a Mobility Management Entity (MME) 122 and eNB 104 wirelessly communicates with a MME 124 using respective S1 interfaces. Each of MME 122 and MME 124 may be replaced by a Serving Gateway (S-GW). Each of MME 122 and MME 124 further communicate with a Packet Data Network Gateway (PDN-GW) 126 through respective S5 interfaces. PDN-GW 126 further connects wireless communication network 100 with the Internet 128 through an SGi link.

It will be apparent to a person skilled in the art that wireless communication network 100 is not limited to an LTE network and may include but is not limited to Worldwide Interoperability for Microwave Access (WiMAX), Code Division Multiple Access (CDMA), Enhanced Data rates for GSM Evolution (EDGE), and High Speed Packet Access (HSPA). It will be further apparent to a person skilled in the art that for a wireless communication network other than LTE, network components and parameters associated with that wireless communication network may be used.

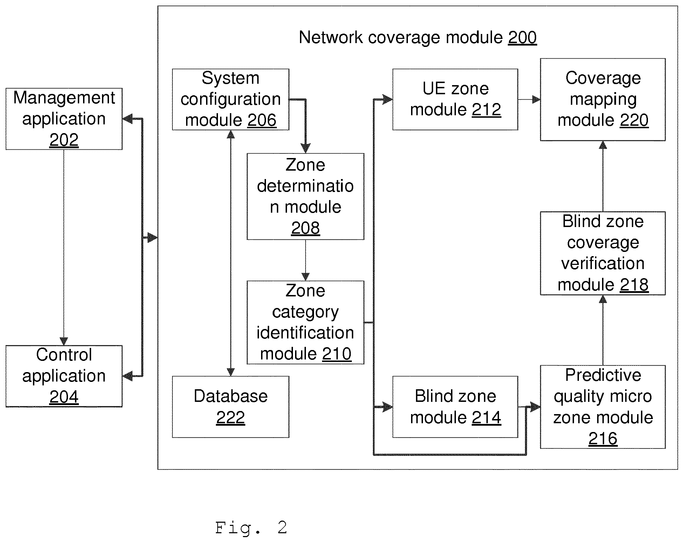

FIG. 2 is a block diagram illustrating communication of various components of a network coverage module 200 with a management application 202 and a control application 204 in a Base Station (BS), in accordance with an embodiment. Network coverage module 200 includes a system configuration module 206, a zone determination module 208, a zone category identification module 210, a UE zone module 212, a blind zone module 214, a predictive quality micro zone module 216, a blind zone coverage verification module 218, and a coverage mapping module 220.

To determine the radio coverage, the system configuration module 206 collects a plurality of configuration parameters associated with the wireless communication network 100 that includes the BS. To this end, system configuration module 206 communicates with the control application 204 and the management application 202. Examples of the plurality of configuration parameters may include, but are not limited to a threshold number of signal measurement reports, a timer for algorithm trigger, a micro zone stale timer, BS transmission power, size of a micro zone, signal quality factor of a micro zone, good quality zone threshold, bad quality zone threshold, distance factor of a micro zone, a quality factor for a macro zone, and a number of sectors within the coverage area of the BS. In an embodiment, the plurality of configuration parameters are represented and described below in Table 1:

**Table 1**

| Configuration Parameter | Symbol | Description |
|---|---|---|
| Threshold number of signal measurement reports | $\alpha_{Th\_R}$ | This configuration parameter is received from management application 202 and is representative of a predefined threshold number of signal measurement reports received from a micro zone within a coverage area of a BS. The shape of a micro zone, for example, may be that of an equilateral triangle, such that six micro zones tessellate to form a hexagonal macro zone. Multiple hexagonal macro zones further tessellate to overlay maximum coverage area of the BS. |
| Timer for algorithm trigger | $\delta_{Atm}$ | This configuration parameter is the timer duration for triggering an algorithm to collect signal measurement reports from a micro zone within coverage area of the BS. On expiry of this timer, quality of signal received by UEs within the micro zone is determined. |
| Micro zone stale timer | $\varphi_{Stm}$ | This configuration parameter is the timer duration for collecting signal measurement reports from a micro zone within the coverage area of the BS. This timer starts when the number of signal measurement reports for a micro zone has reached a predefined threshold number of signal measurement reports. |
| BS transmission power | $\rho_{BS\_Tx}$ | This configuration parameter is received from management application 202 and is used for calculating the coverage area of the BS by determining the Cell Radius, i.e., **$Cell_{Rad}$**. |

(continued)

| Configuration Parameter | Symbol | Description |
|---|---|---|
| Size of micro zone | $\omega_{Sz}$ | This configuration parameter is representative of the size of an equilateral triangular micro zone within the coverage area of the BS. The area of a micro zone is calculated in such a way that micro zones will tessellate to overlay maximum portion of the coverage area of the BS. In an exemplary embodiment, the size of a micro zone may be calculated using equation 1 given below:<br><br>$$(\sqrt{3}/4)^* \ (Cell_{Rad}/n)^2 \ldots\ldots\ldots\ldots\ldots\ldots(1)$$<br><br>where,<br>$n$ is the number of divisions for Cell Radius ($Cell_{Rad}$). For example, $n = 2, 4, 8, \ldots, m$ |
| Signal quality factor of a micro zone | $\Omega_{Micro\_Q}$ | This configuration parameter is used to compute the overall signal quality of a micro zone and is determined based on the average Radio Link Failure (RLF) and Handover Failure (HF) for that micro zone. |
| Good quality zone threshold | $\gamma_{Th\_GQ}$ | This configuration parameter is used to identify good quality micro and macro zones. |
| Bad quality zone threshold | $\pi_{Th\_BQ}$ | This configuration parameter is used to identify bad quality micro and macro zones. |
| Distance factor of a micro zone | $\beta_{Micro\_Dist}$ | This configuration parameter is representative of distance of a micro zone and a macro zone that includes the micro zone from the BS. |
| Quality factor for a macro zone | $\mu_{Macro\_Q}$ | This configuration parameter is used to compute the overall signal quality of a macro zone and is determined based on average RLF and average HF of the macro zone. |
| Number of sectors within the coverage area of the BS | $\sigma_{BS\_Sec}$ | This configuration parameter is representative of the total number of sectors for the BS and is further used to calculate the number of micro zones within each sector. |

The information regarding the plurality of configuration parameters collected by the system configuration module 206 is stored in a database 222 in the network coverage module 200. Database 222 further includes information corresponding to a predefined set of signal parameters which may include but are not limited to average HF, average RLF, Reference Signal Received Power (RSRP), and average signal strength, and the quality factor for a macro zone.

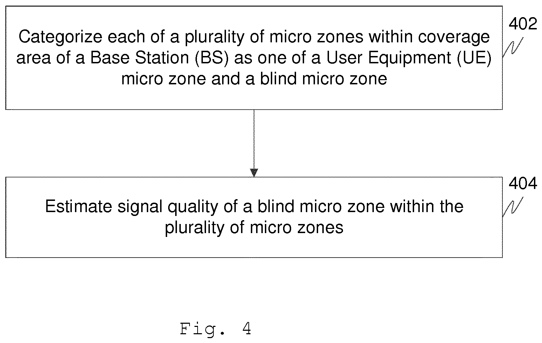

Zone determination module 208 determines the cell radius of the coverage area of the BS and the number of micro zones within the coverage area. To determine the cell radius, zone determination module 208 extracts the BS transmission power, i.e., $\rho_{BS\_Tx}$, from the database 222. Further, to determine a plurality of micro zones within the coverage area of the BS, zone determination module 208 extracts the configuration parameter of the number of sectors, i.e., $\sigma_{BS\_Sec}$, from the database 222. Each micro zone may have a shape such that the plurality of micro zones tessellate to overlay a maximum coverage area of the BS. Thereafter, the zone determination module 208 identifies a plurality of macro zones, such that, each macro zone is a collation of one or more micro zones. In an embodiment, each micro zone has a shape of an equilateral triangle. In this case, each macro zone is hexagonal in shape and is made by collating six micro zones. The creation of micro and macro zones is explained in detail in the exemplary embodiment given in FIG. 4.

Thereafter, zone determination module 208 receives signal measurement reports from a plurality of UEs within the plurality of micro zones. Using these signal measurement reports, zone determination module 208 extracts the RSRP, the RLF, and the HF values for each of the plurality of micro zones. Additionally, zone determination module 208 compares the number of signal measurement reports with the threshold number of signal measurement reports.

The information regarding the plurality of micro zones and the plurality of macro zones is communicated to zone category identification module 210, which performs a check to determine whether one or more signal measurement reports have been received from UEs within each micro zone. Based on the presence of signal measurement reports, zone category identification module 210 categorizes a micro zone as a UE micro zone or a blind micro zone. A UE micro zone is that micro zone for which one or more signal measurement reports have been received. On the other hand, a blind micro zone is that micro zone for which no signal measurement report has been received.

After categorization of each micro zone as a UE micro zone or a blind micro zone, UE zone module 212 performs a check to determine whether the number of signal measurement reports received from a particular UE micro zone satisfies the threshold number of signal measurement report, i.e., $\alpha_{Th\_R}$. If this criterion is satisfied, UE zone module 212 computes a predefined set of signal parameters that includes but is not limited to average signal strength, the RSRP, average RLF, and average HF for that UE micro zone. This computation is repeated for each UE micro zone within the coverage area of the BS. For example, if the threshold number of signal measurement reports is fixed at ten, then UE zone module 212 will compute the predefined set of signal parameters for a UE micro zone only when the total number of signal measurement reports received from that UE micro zone is greater than or equal to ten.

After computing the predefined set of signal parameters, UE zone module 212 categorizes each UE micro zone as a good quality UE micro zone, a medium quality UE micro zone, or a bad quality UE micro zone based on a comparison with configuration parameters that include the good quality zone threshold, i.e., $\gamma_{Th\_GQ}$, and the bad quality zone threshold, i.e., $\pi_{Th\_BQ}$. In an exemplary embodiment, if the signal quality of a UE micro zone computed based on the predefined set of signal parameters associated with it is greater than or equal to the good quality zone threshold, i.e., $\gamma_{Th\_GQ}$, the UE micro zone is categorized as a good quality micro zone. Further, if the signal quality of a UE micro zone is between the good quality zone threshold, i.e., $\gamma_{Th\_GQ}$, and the bad quality zone threshold, i.e., $\pi_{Th\_BQ}$, the UE micro zone is categorized as a medium quality UE micro zone. However, if the signal quality of the UE micro zone is less than or equal to the bad quality zone threshold, i.e., $\pi_{Th\_BQ}$, the UE micro zone is categorized as a bad quality micro zone. The threshold for a good quality zone and the threshold for a bad quality zone are determined based on signal strength of the BS.

With regards to blind micro zones, blind zone module 214 communicates with zone category identification module 210 to receive information regarding blind micro zones in the coverage area of the BS. To estimate signal quality for each blind micro zone, for every timer for algorithm trigger, i.e., $\delta_{Atm}$, blind zone module 214 adjusts or recalculates a quality factor for macro zone, i.e., $\mu_{Macro\_Q}$, for each micro zone within the coverage area of the BS.

To adjust or recalculate a quality factor for macro zone, blind zone module 214 firstly determines the number of macro zones for each sector within the coverage area of the BS. Thereafter, for a particular macro zone, blind zone module 214 selects a UE micro zone within that macro zone for which a maximum number of signal measurement reports has been received. Based on these signal measurement reports, blind zone module 214 computes an actual macro zone signal quality, i.e., $Q_{mi\_act}$, for that macro zone. Additionally, for the selected UE micro zone, blind zone module 214 estimates the signal quality, i.e., $Q_{mi\_est}$, of a set of neighboring micro zones surrounding the selected UE micro zones. In an exemplary embodiment, a set of neighboring micro zone is a hexagonal macro zone that includes six micro zones of the shape of equilateral triangles of the same size. In this exemplary embodiment, blind zone module 214 estimates the signal quality of four macro zones surrounding the selected UE micro zone. Blind micro zone 214 then computes a deviation value for signal quality, i.e., $Q_{Dev}$, which is represented in equation 2 given below:

$$\text{Dev} = (Q_{mi\_act} - Q_{mi\_est.}) \ldots\ldots\ldots\ldots\ldots (2)$$

Blind zone module 214 then compares this deviation value with a threshold deviation, i.e., $Q_{Dev\_Th}$, which is determined based on the signal strength of the BS. In an embodiment, if deviation so calculated is not within the desired limits, blind zone module 214 recalculates the quality factor for macro zone, i.e., $\mu_{Macro\_Q}$, for each time for algorithm trigger, i.e., $\delta_{Atm}$. Blind zone module 214 then communicates the quality factors for macro zones computed for each micro zone to predictive quality micro zone module 216.

Predictive quality micro zone module 216 communicates with zone category identification module 210 to receive information regarding the plurality of micro zones within the coverage area of the BS. Thereafter, for each micro zone, predictive quality micro zone module 216 computes average signal quality for one or more set of neighboring micro zones, for which predictive quality micro zone module 216 uses average signal strength, average RLF, and average HF of the one or more set of neighboring micro zones and the quality factor for macro zone determined for each of the one or more set of neighboring micro zones. Additionally, predictive quality micro zone module 216 uses average RLF and average HF of a sector comprising the one or more set of neighboring micro zones to compute the average signal quality.

In an exemplary embodiment, a set of neighboring micro zones may be a macro zone. In this embodiment, for a particular micro zone, predictive quality micro zone module 216 identifies four such macro zones surrounding the micro zone and performs the above described computations with respect to these four macro zones. Thereafter, predictive quality micro zone 216 calculates average signal quality of these four macro zones covering that particular micro zone. The advantage of using four macro zones is that the particular micro zone for which the average signal quality is being predicted is completely surrounded by the four macro zones, thus resulting in a more accurate prediction.

After prediction of signal quality of each micro zone, predictive quality micro zone 216 categorizes each micro zone, which may be a blind micro zone or a UE micro zone, as a good quality micro zone, a medium quality micro zone, or a bad quality micro zone based on a comparison with configuration parameters that include the good quality zone threshold, i.e., $\gamma_{Th\_GQ}$, and the bad quality zone threshold, i.e., $\pi_{Th\_BQ}$. In an exemplary embodiment, if the signal quality predicted for a micro zone is greater than or equal to the good quality zone threshold, i.e., $\gamma_{Th\_GQ}$, the micro zone is categorized as a good quality micro zone. Further, if the signal quality predicted for a micro zone is between a good quality zone threshold, i.e., $\gamma_{Th\_GQ}$ and a bad quality zone threshold, i.e., $\pi_{Th\_BQ}$, the micro zone is categorized as a medium quality micro zone. However, if the signal quality predicted for a micro zone is less than or equal to the bad quality zone threshold, i.e., $\pi_{Th\_BQ}$, then the micro zone is categorized as a bad quality micro zone. The good quality zone threshold and the bad quality zone threshold are determined based on the signal strength of the BS.

Predictive quality micro zone module 216 then communicates the signal quality predicted for each blind micro zone to blind zone coverage verification module 218 for verification and adjustment of the signal strength of the BS. Thereafter, blind zone coverage verification module 218 verifies the signal quality predicted for a blind micro zone with a threshold limit of signal error deviation, i.e, $Sig_\delta$. In an exemplary embodiment, blind zone coverage verification module 218 determines whether the error in the signal strength predicted for a blind micro zone, i.e., $SigBZ_{err}$ for timer for algorithm trigger at $\delta_{Atm-1}$ and $\delta_{Atm}$ is within the threshold limit of signal error deviation i.e., $Sig_\delta$. If the error is within the threshold limit of signal error deviation, then the prediction of signal quality made by predictive quality micro zone module 216 for that blind micro zone is assumed to be correct. However, if the error exceeds or is below the threshold limit of signal error deviation, then the error in the signal strength for the blind micro zone is recalculated such that it is within the threshold limit of signal error deviation, i.e, $Sig_\delta$, for every timer for algorithm trigger.

Thereafter, coverage mapping module 220 communicates with UE zone module 212 and blind zone coverage verification module 218 to receive information regarding signal quality of each UE micro zone and each blind micro zone within the coverage area of the BS to create a radio coverage map. Coverage mapping module 220 then sends this information to management application 202. In an embodiment, the above described functionalities of modules within network coverage module 200 are performed by one or more processors within the BS.

As the coverage area of the BS is divided into multiple micro zones and macro zones, signal measurement reports received from these micro and macro zones help in accurate and efficient classification of a radio coverage map. These signal measurement reports include a combination of signal parameters, for example, of RSRP, HF, and RLF. As a result, the determination of radio coverage may be precise, thereby reducing error in creating the radio coverage map. Additionally, since for blind micro zones signal quality may be predicted and then later verified, a holistic view of the coverage area may be provided, which otherwise would have been left blank in other known methods and systems.

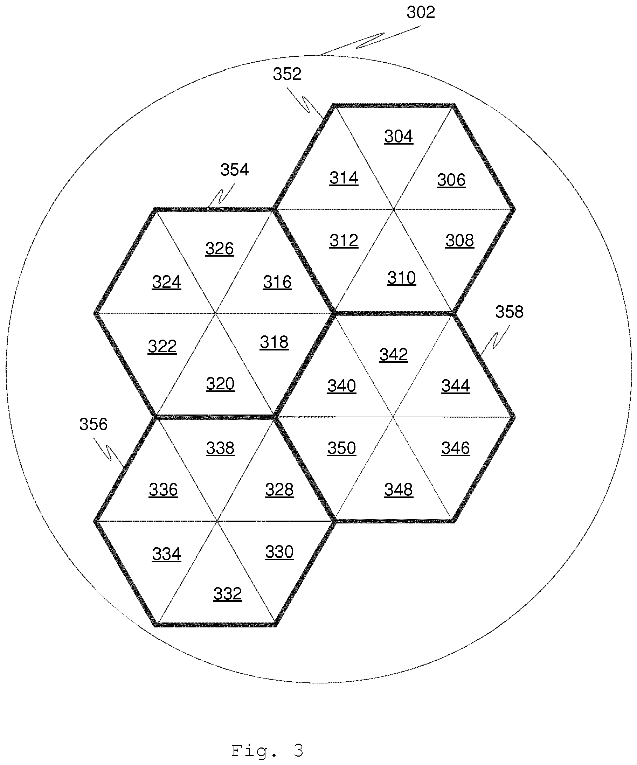

FIG. 3 illustrates a portion of coverage area of the BS divided into micro zones and macro zones, in accordance with an exemplary embodiment. It will be apparent to a person skilled in the art that the invention is not limited to the exemplary embodiment disclosed herein.

As explained in detail in conjunction with FIG. 2, coverage area 302 of the BS is divided into 24 micro zones that are equilateral triangles of the same size, i.e., micro zones 304 to 350. The system as disclosed in FIG. 2 collates these 24 micro zones into four hexagonal macro zones, such that each macro zone incudes six micro zones. Thus, micro zones 304, 306, 308, 310, 312, and 314 are collated to create a macro zone 352. Similarly, a macro zone 354 includes micro zones 316, 318, 320, 322, 324, and 326; a macro zone 356 includes micro zones 328, 330, 332, 334, 336, and 338; and a macro zone 358 includes micro zones 340, 342, 344, 346, 348, and 350.

In this exemplary embodiment, micro zone 340 is a blind micro zone, thus for estimation of signal quality of micro zone 340, macro zones 352, 354, 356, and 358 are selected as one or more set of neighboring micro zones, such that each of macro zones 352, 354, 356, and 358 is a set of neighboring micro zone.

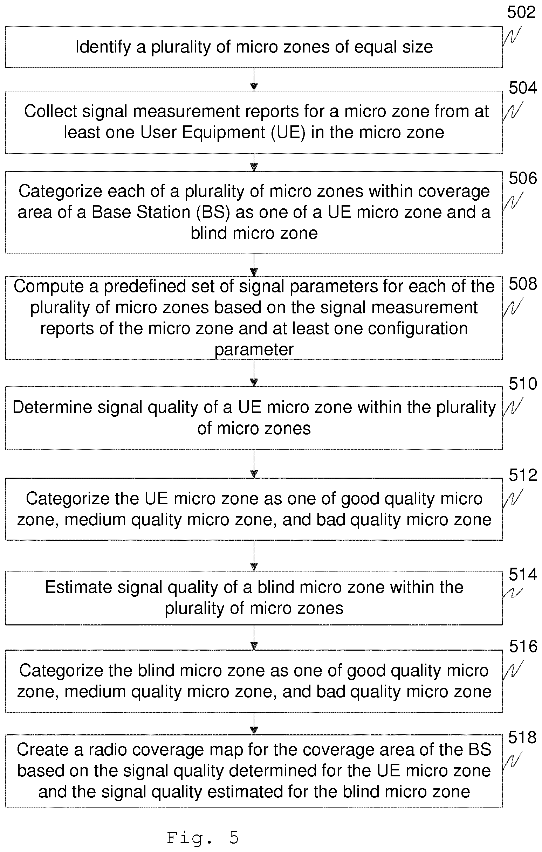

FIG. 4 illustrates a flowchart of a method for determining radio coverage in a wireless communication network, in accordance with an embodiment. To determine the radio coverage for a BS, firstly a plurality of micro zones of equal size are identified within the coverage area of the BS. After identification of the plurality of micro zones, a plurality of macro zones are also identified. A macro zone includes one or more micro zones. This is explained in detail in conjunction with FIG. 5.

Thereafter, signal measurement reports for each micro zone are collected from one or more UEs in each micro zone within the coverage area of the BS. Based on the signal measurement reports, at 402 each micro zone within the coverage area of the BS is categorized as one of a UE micro zone and a blind micro zone. A UE micro zone is associated with one or more signal measurement reports and a blind micro zone is not associated with any signal measurement report. In other words, for a UE micro zone at the minimum one signal measurement report is received; however, for a blind micro zone no such signal measurement report is received. Thus, every micro zone within the coverage area of the BS is categorized either as a UE micro zone or as a blind micro zone.

Based on signal measurement reports associated with a micro zone and one or more configuration parameters, a predefined set of signal parameters are computed for the micro zone. This is repeated for each micro zone in each sector within the coverage area of the BS. The one or more configuration parameter is selected from a group including threshold number of signal measurement reports, time duration for collecting signal measurement reports, transmission power of the BS, size of a micro zone, signal quality factor of a micro zone, good quality micro zone threshold, bad quality micro zone threshold, distance factor of a micro zone, and number of sectors in the coverage area of the BS. The configuration parameters have been explained in detail in conjunction with FIG. 2. Further, the predefined set of signal parameters include average HF, average RLF, RSRP, and average signal strength.

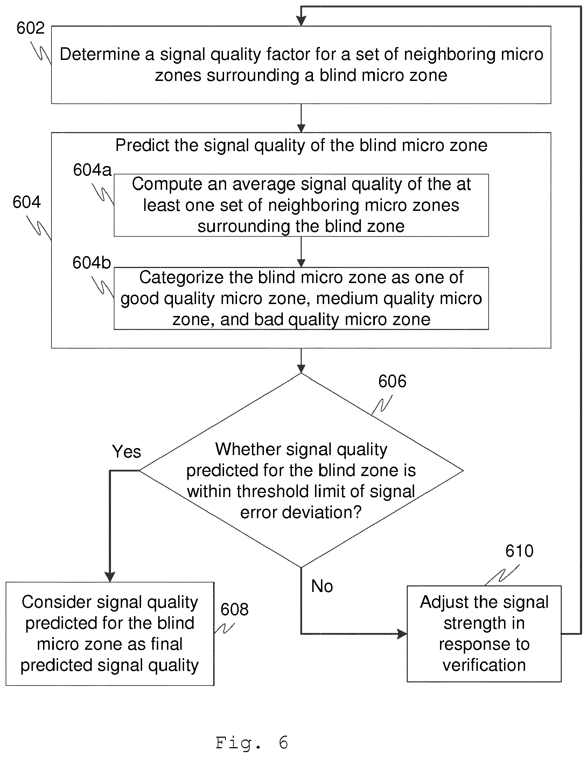

For a UE micro zone within the plurality of micro zones, signal quality is determined based on the predefined set of signal parameters extracted from a predefined threshold number of signal measurement reports received from the UE micro zone. Similarly, signal quality is determined for each UE micro zone within the coverage area of the BS. The determination of signal quality for each UE micro zone is further explained in detail in conjunction with FIG. 5. With regards to a blind micro zone within the plurality of micro zones, at 404, signal quality of the blind micro zone is estimated based on signal quality of one or more set of neighboring micro zones surrounding the blind micro zone. The signal quality of each set of neighboring micro zones is determined based on the predefined set of signal parameters extracted from corresponding signal measurement reports. In an exemplary embodiment, a set of neighboring micro zones is a hexagonal macro zone that includes six micro zones of the shape of an equilateral triangle. In this exemplary embodiment, a blind micro zone is thus surrounded by four hexagonal macro zones, each including six micro zones. This is further explained in detail in conjunction with FIG. 6.

FIG. 5 illustrates a flowchart of a method for determining radio coverage in a wireless communication network, in accordance with another embodiment. To determine the radio coverage for a BS, at 502, a plurality of micro zones of equal size are identified within the coverage area of the BS. After identification of the plurality of micro zones, a plurality of macro zones are also identified. A macro zone includes one or more micro zones. In an exemplary embodiment, each micro zone is an equilateral triangle of equal size. Thus, a macro zone is hexagonal in shape and includes six micro zones. In other words, when micro zones have the shape of equilateral triangles of equal size, macro zones have the shape of a hexagon. The plurality of micro zones are identified based on the transmission power of the BS and the number of sectors within the coverage area of the BS. In an exemplary embodiment, the plurality of micro zones and the plurality of macro zones are identified as described below:

> **Step 1:** Extract configuration parameters that include the BS transmission power, i.e., $\rho_{BS\_Tx}$, and the number of sectors, i.e., $\sigma_{BS\_Sec}$.
> **Step 2:** Calculate the coverage area of the BS using the configuration parameter: $\rho_{BS\_Tx}$
> **Step 3:** Divide the coverage area into sectors using the configuration parameter: $\sigma_{BS\_Sec}$
> **Step 4:** Create the plurality of micro zones:
>
> Divide each sector into the plurality of micro zones of the shape of equilateral triangles of equal size, where the size of a micro zone is calculated using equation 3 and the number of micro zones in the coverage area of the BS is calculated using equation 4 given below:

$$\omega_{Sz} = (\sqrt{3}/4)^* \, (Cell_{Rad}/n)^2 \; \ldots\ldots\ldots \; (3)$$

> where,
>
> > $\omega_{Sz}$ = Size of a micro zone;
> > $Cell_{Rad}$ = Radius of the coverage area of the BS;
> > n = number of division of $Cell_{Rad}$ and n being equal to 2, 4, 8,...m.

$$Mic\_Num = 2^n \; \ldots\ldots\ldots\ldots\ldots\ldots \; (4)$$

> > where,
> > $Mic\_Num$ = total number of micro zones.

> **Step 5:** Create the plurality of Macro zones:
>
> For a micro zone in a sector within the coverage area of the BS, a macro zone is created by collating five neighboring micro zones surrounding the micro zone.
> This step is repeated until all micro zones in all sectors within the coverage area of the BS have been covered. For example, with reference to FIG. 3, coverage area 302 is divided into 24 equilateral triangular micro zones 304 to 350, which are further collated to create four hexagonal macro zones, i.e., macro zones 352, 354, 356, and 358.

Thereafter, at 504 signal measurement reports for each micro zone are collected from one or more UEs in each micro zone within the coverage area of the BS. Based on the signal measurement reports, at 506 each micro zone within coverage area is categorized as one of a UE micro zone and a blind micro zone. A UE micro zone is associated with one or more signal measurement reports and a blind micro zone is not associated with any signal measurement report. At 508, based on signal measurement reports associated with a micro zone and one or more configuration parameters, a predefined set of signal parameters are computed for the micro zone. This is repeated for each micro zone in each sector within the coverage area of the BS. For example, with reference to FIG. 3, a predefined set of signal parameters are computed for each of micro zones 304 to 350 within coverage area 302.

At 510, signal quality is determined for a UE micro zone within the plurality of micro zones based on the predefined set of signal parameters extracted from a predefined threshold number of signal measurement reports received from the UE micro zone. Similarly, signal quality is determined for each UE micro zone within the coverage area of the BS. In an exemplary embodiment, signal quality of a UE micro zone is determined as described below:

**Step 1:** Initiate micro zone stale timer, i.e., $\varphi_{Stm}$

**Step 2:** Calculate the predefined set of signal parameters for the UE micro zone that include:

(i) Average signal strength
(ii) Average RLF
(iii) Average HF
(iv) Total number of samples of signal measurement reports, i.e., $Sam_{num}$
This step is repeated for each UE micro zone until the predefined set of signal parameters are calculated for total number of UE micro zone which will be less than equal to the total number of micro zones, i.e., $Mic\_Num$

**Step 3:** For the sector that includes the UE micro zone, calculate the following:

(i) Average RLF
(ii) Average HF

This step is repeated for each sector until the above given parameters are calculated for the total number of sectors, i.e., $\sigma_{BS\_Sec}$.

**Step 4:** For the UE micro zone, if on expiry of $\delta_{Atm}$, $Sam_{num} > \alpha_{Th\_R}$ (threshold number of signal measurement reports), then signal parameters calculated for the UE micro zone and the sector at step 2 and step 3 are stored in a UE micro zone report, i.e., $ZDB_{Q\_th}$.

This step is repeated for the total number of UE micro zones, which is less than equal to the total number of micro zones, i.e., $Mic\_Num$. The signal parameters calculated for each UE micro zone are then stored in $ZDB_{Q\_th}$.

**Step 5:** Using $ZDB_{Q\_th}$, calculate the signal quality of the UE micro zone using equation 5 given below:

$$QMZ = ASS_M *(ARLF_M / \ ARLF_{Sec})* (AHF_M / AHF_{Sec})* \Omega_{Micro\_Q} \ \ldots\ldots..(5)$$

where,

$QMZ$= the signal quality of the UE micro zone;
$ASS_M$ = Average signal strength for the UE micro zone;
$ARLF_M$ =Average radio link failure for the UE micro zone;
$ARLF_{Sec}$ =Average radio link failure for the sector that includes the UE micro zone;
$AHF_M$ = Average handover failure for the UE micro zone;
$AHF_{Sec}$ = Average handover failure for the sector that includes the UE micro zone;
$\Omega_{Micro\_Q}$ = quality factor of the micro zone.

This step is repeated for the total number of UE micro zones in the coverage are and the total number of sectors, i.e., $\sigma_{BS\_Sec}$.

For example, with reference to FIG. 3, micro zone 340 is the only blind micro zone amongst micro zones 304 to 350. Thus, signal quality is computed using the above exemplary embodiment for micro zone 304 to 350, excluding blind micro zone 340. At 512, the UE micro zone is categorized as one of a good quality micro zone, a medium quality micro zone, or a bad quality micro zone based on a comparison of the signal quality of the UE micro zone with the good quality zone threshold and the bad quality zone threshold. Similarly, each UE micro zone within the coverage area of the BS is categorized as one of a good quality micro zone, a medium quality micro zone, or a bad quality micro zone. In an exemplary embodiment, a UE micro zone is categorized as described below:

**Step1:** Calculate the function given in equation 6 given below:

$$fn\ (MicroZone_{Dist}\ ,\ \beta_{Micro\_Dist})\ldots\ldots\ldots\ldots\ldots\ (6)$$

where,

$MicroZone_{Dist}$ = distance of the UE micro zone from the BS;
$\beta_{Micro\_Dist}$ = micro zone distance factor;
$fn$ = a function dependent on parameter $MicroZone_{Dist}$ and $\beta_{Micro\_Dist}$.

**Step 2:** Categorize the UE micro zone as a good quality micro zone, a medium quality micro zone, or a bad quality micro zone using equations 7 and equation 8:

$$QMZ > ((\gamma_{Th\_GQ})\ ^{*}\ fn\ (MicroZone_{Dist}\ ,\ \beta_{Micro\_Dist}))\ldots\ldots\ (7)$$

$$QMZ > ((\pi_{Th\_BQ})\ ^{*}\ fn(MicroZone_{Dist}\ ,\ \beta_{Micro\_Dist}))\ldots\ldots\ldots(8)$$

where,

$QMZ$ = the signal quality of the UE micro zone;
$\gamma_{Th\_GQ}$ = good quality zone threshold;
$\pi_{Th\_BQ}$ = bad quality zone.

If the equation 7 is true, the UE micro zone is categorized as a good quality micro zone. Further, if the equation 8 is true, then the UE micro zone is categorized as a bad quality micro zone. However, if the equation 8 is false, then the UE micro zone is categorized as a medium quality micro zone. Step 1 and step 2 are repeated for the total number of UE micro zones and the total number of sectors, i.e., $\sigma_{BS\_Sec}$.

After the signal quality of each UE micro zone has been calculated and each UE micro zone has been categorized, at 514, the signal quality of a blind micro zone within the plurality of micro zones is estimated. Similarly, the signal quality of each blind micro zone within the coverage area of the BS is estimated. For example, with reference to FIG. 3, as coverage area 302 includes only one blind micro zone, i.e., micro zone 340, the signal quality estimation is done only for micro zone 340. Thereafter, at 516, the blind micro zone is categorized as a good quality micro zone, a bad quality micro zone, or a medium quality micro zone. These are further explained in detail in conjunction with FIG. 6. At 518, a radio coverage map is created for the coverage area of the BS based on the signal quality determined for the UE micro zone and the signal quality estimated for the blind micro zone. In an exemplary embodiment, the radio coverage map is created as described below:

**Step1:** Extract the signal quality information for each UE micro zone within the coverage area of the BS based on the categorization of each UE micro zone as a good quality micro zone, a bad quality micro zone, or a medium quality micro zone.
**Step 2:** Create a radio coverage map for all UE micro zones within the coverage area of the BS.
**Step 3:** Extract the signal quality information for each blind micro zone within the coverage area of the BS based on the categorization of each blind micro zone as a good quality micro zone, a bad quality micro zone, or a medium quality micro zone.
**Step 4:** Create a radio coverage map for all blind micro zones within the coverage area of the BS.
**Step 5:** Communicate the radio coverage map for all UE micro zones and all blind micro zones to management application 202.

For example, with reference to FIG. 3, a radio coverage map is created for coverage area 302 using categorization of micro zone 304 to 350, where, except for micro zone 340, each micro zone is a UE micro zone.

As the coverage area of the BS is divided into multiple micro zones and macro zones, signal measurement reports received from these micro and macro zone help in accurate and efficient classification of the radio coverage map. These signal measurement reports include a combination of signal parameters, for example, of RSRP, HF, and RLF. As a result, the determination of radio coverage may be precise, thereby reducing error in creating the radio coverage map.

FIG. 6 illustrates a flowchart of a method for estimating signal quality of a blind micro zone, in accordance with an embodiment. At 602 a signal quality factor for a set of neighboring micro zones surrounding the blind micro zone is determined. The signal quality factor is determined for each of the one or more set of neighboring micro zones. In an exemplary embodiment, the set of neighboring micro zones is a macro zone as explained before in FIG. 4 and FIG. 5 above. In this exemplary embodiment, signal quality factor is determined for four macro zones surrounding the blind micro zone. For example, with reference to FIG. 3, micro zone 340 is a blind micro zone and signal quality factor is determined for each of macro zones 352, 354, 356, and 358. In other words, each of macro zones 352, 354, 356, and 358 is a set of neighboring micro zones.

The signal quality factor for the set of neighboring micro zones surrounding the blind micro zone is determined based on average RLF and average HF of the set of neighboring micro zones. Additionally, to determine the signal quality factor, signal quality deviation between actual signal quality of a UE micro zone associated with a maximum number of signal measurement reports within the set of neighboring micro zones and an average estimated signal quality of the set of neighboring micro zones is calculated. This signal quality deviation is then compared with a threshold deviation of the BS determined based on the signal strength of the BS. In an exemplary embodiment, the signal quality factor is determined using the method described below:

> **Step1:** Create a hexagonal macro zone that includes five neighboring micro zones surrounding a blind micro zone in addition to the blind micro zone.
> This step is then repeated for the total number of blind micro zones and the total number of sectors, i.e., $\sigma_{BS\_Sec}$.
> **Step 2:** Initiate time for algorithm trigger, $\delta_{Atm}$ and execute step 3 to step 6 until expiry of $\delta_{Atm}$.
> **Step 3:** Determine a UE micro zone within the macro zone for which maximum number of signal measurement reports has been received. Calculate actual signal quality, $Q_{mi\_act}$, of the UE micro zone.
> **Step 4:** Estimate signal quality, $Q_{mi\_est}$, of four neighboring macro zones surrounding the blind micro zone.
> **Step 5:** Calculate signal quality deviation using equation 9 given below:

$$Q_{Dev.} = ABS\ (Q_{mi\_act.} - Q_{mi\_est.})\ \ldots\ldots\ldots\ldots\ldots\ (9)$$

> where,

> > $Q_{Dev}$ = signal quality deviation;
> > $Q_{mi\_act}$ = actual signal quality of the UE micro zone;
> > $Q_{mi\_est}$ = estimated signal quality of four surrounding macro zones

> **Step 6:** If $Q_{Dev} < Q_{Dev\_Th}$, then macro zone quality factor, i.e., $\mu_{Macro\_Q}$, is unchanged, else $\mu_{Macro\_Q}$ is adjusted.
> where,
> $Q_{Dev\_Th}$ = threshold deviation of the BS.

Step 3 to step 6 are repeated for all the macro zones created for all blind micro zone within the total number of sectors, i.e., $\sigma_{BS\_Sec}$.

At 604, the signal quality of the blind micro zone is predicted, which includes computing, at 604a, an average signal quality of the one or more set of neighboring micro zones. In an exemplary embodiment, a set of neighboring micro zones is a macro zone that includes such neighboring micro zones surrounding the blind micro zone. For example, with reference to FIG. 3, for blind micro zone 340, a set of neighboring micro zones is macro zone 358 that includes five micro zones, i.e., micro zones 342, 344, 346, 348, and 350, in addition to blind micro zone 340.

The average signal quality is computed based on average RLF of a sector that includes the one or more set of neighboring micro zones. Computation of average signal quality additionally requires average signal strength, average RLF, and average HF of the one or more set of neighboring micro zones and a signal quality factor determined for each of the one or more set of neighboring micro zones. In an exemplary embodiment, when a set of neighboring micro zones is a macro zone, then the average signal quality is computed for four neighboring macro zones surrounding the blind micro zone. In another exemplary embodiment, for a blind micro zone an average signal quality is computed for four neighboring macro zones surrounding the blind micro zone using the method described below:

> **Step1:** For the blind micro zone, determine four neighboring macro zones surrounding the blind micro zone.
> **Step 2:** For each of these four neighboring macro zones, calculate following predefined signal parameters

> > (i) Average signal strength
> > (ii) Average HF

(iii) Average RLF

**Step 3:** Calculate signal quality of a neighboring macro zone using equation 10 given below:

$$QMaZ = ASS_{Ma} * (ARLF_{Ma} / ARLF_{Sec}) * (AHF_{Ma} / (AHF_{Sec}) * \mu_{Macro\_Q}..(10)$$

where,

$QMaZ$ = the signal quality of the neighboring macro zone;
$ASS_{Ma}$ = Average signal strength for the neighboring macro zone;
$ARLF_{Ma}$ = Average radio link failure for the neighboring macro zone;
$ARLF_{Sec}$ = Average radio link failure for the sector that includes the neighboring macro zone;
$AHF_{Ma}$ = Average handover failure for the neighboring macro zone;
$AHF_{Sec}$ = Average handover failure for the sector that includes the neighboring macro zone;
$\mu_{Macro\_Q}$ = quality factor of a macro zone.

This calculation is performed for each of the four neighboring macro zones surrounding the blind micro zone. For example, with reference to FIG. 3, for blind micro one 340, this calculation is made for macro zones 352, 354, 356, and 358. **Step 4:** Calculate average signal quality for the four neighboring macro zones using equation 11 given below:

$$QMaZ_{avj} = \sum QMaZ_k / 4 \ldots\ldots\ldots\ldots (11)$$

where,

$QMaZ_{avj}$ = average signal quality for the four neighboring macro zones;
$QMaZ_k$ = signal quality of a neighboring macro zone;
k = 1, 2, 3, 4

Thereafter, at 604b, the blind micro zone is categorized as one of a good quality micro zone, a medium quality micro zone, or a bad quality micro zone based on the average signal quality of the one or more set of neighboring micro zones, distance of the blind zone from the BS, the good quality zone threshold, and the bad quality zone threshold. In an exemplary embodiment, a blind micro zone is categorized using the method described below:

**Step1:** Calculate the function in equation 12 given below:

$$fn (MicroZone_{Dist} , \beta_{Micro\_Dist})\ldots\ldots\ldots\ldots\ldots (12)$$

where,

$MicroZone_{Dist}$ = Distance of the blind micro zone from the BS;
$\beta_{Micro\_Dist}$ = micro zone distance factor;
$fn$ = a function dependent on parameter $MicroZone_{Dist}$ and $\beta_{Micro\_Dist}$.

**Step 2:** Categorize the blind micro zone as a good quality micro zone, a medium quality micro zone, or a bad quality micro zone using equations 13 and equation 14:

$$QMaZ_{avj} > ((\gamma_{Th\_GQ}) * fn (MicroZone_{Dist} , \beta_{Micro\_Dist}))\ldots\ldots (13)$$

$$QMaZ_{avj} > ((\pi_{Th\_BQ}) * fn (MicroZone_{Dist} , \beta_{Micro\_Dist}))\ldots\ldots\ldots(14)$$

where,

$QMaZ_{avj}$ = average signal quality for the four neighboring macro zones;

$\gamma_{Th\_GQ}$ = good quality zone threshold;
$\pi_{Th\_BQ}$ = bad quality zone threshold.

If the equation 13 is true, the blind micro zone is categorized as a good quality micro zone. Further, if the equation 14 is true, then the blind micro zone is categorized as a bad quality micro zone. However, if the equation 14 is false, then the blind micro zone is categorized as a medium quality micro zone. Step 1 and step 2 are repeated for the total number of blind micro zones and the total number of sectors, i.e., $\sigma_{BS\_Sec}$.

Thereafter, at 606, a check is performed to verify the signal quality predicted for the blind zone with the threshold limit of signal error deviation. If the signal quality predicted is within the threshold limit of signal error deviation, at 608, the signal quality predicted for the blind micro zone is considered as a final predicted signal quality. In an exemplary embodiment, the verification is done using the method described below:

**Step1:** For each timer for algorithm trigger, $\delta_{Atm}$, if the signal predicted for the blind micro zone at $\delta_{Atm-1}$, i.e., *SigBZ* is available, calculate error in the predicted signal using equation 15 given below:

$$SigBZ_{err} = SigBZ\,(\delta_{Atm}) - SigBZ\,(\delta_{Atm-1}) \dots\dots\dots\dots\dots\dots\ (15)$$

where,

$SigBZ_{err}$ = error in the signal predicted for the blind micro zone;
$SigBZ(\delta_{Atm})$ = signal predicted at $\delta_{Atm}$;
$SigBZ(\delta_{Atm-1})$ = signal predicted at $\delta_{Atm-1}$.

**Step 2:** Perform a check to determine whether $SigBZ_{err}$ is within the threshold limit of signal error deviation using equation 16 given below:

$$- Sig_\delta < SigBZ_{err} < Sig_\delta \ \dots\dots\dots\dots\dots\dots\ (16)$$

where,

$Sig_\delta$ = threshold limit of signal error deviation for the predicted signal;
$SigBZ_{err}$ = error in the signal predicted for the blind micro zone.

If equation 16 is true then the signal quality predicted for the blind micro zone, i.e., *SigBZ,* is considered as a final predicted signal quality. Step 1 and step 2 are repeated for the total number of blind micro zones and the total number of sectors, i.e., $\sigma_{BS\_Sec}$.

In response to the verification, if the signal quality predicted for the blind micro zone is not within the threshold limit of signal error deviation, at 610, a signal adjustment is performed for the blind micro zone. This is repeated for each blind micro zone within the coverage area of the BS. To perform the signal adjustment, steps given in 602 to 606 are repeated. In an exemplary embodiment, when equation 16 is false, control is returned back to step 1 of exemplary embodiment described under 602. This is repeated for the total number of blind micro zones and the total number of sectors, i.e., $\sigma_{BS\_Sec}$.

As the coverage area of the BS is divided into multiple micro zones and macro zones, signal measurement reports received from these micro and macro zones help in accurate and efficient classification of the radio coverage map. Additionally, as for blind zones signal quality may be predicted and then later verified, a holistic view of the coverage area may be provided, which otherwise would be left blank in other known methods and systems.

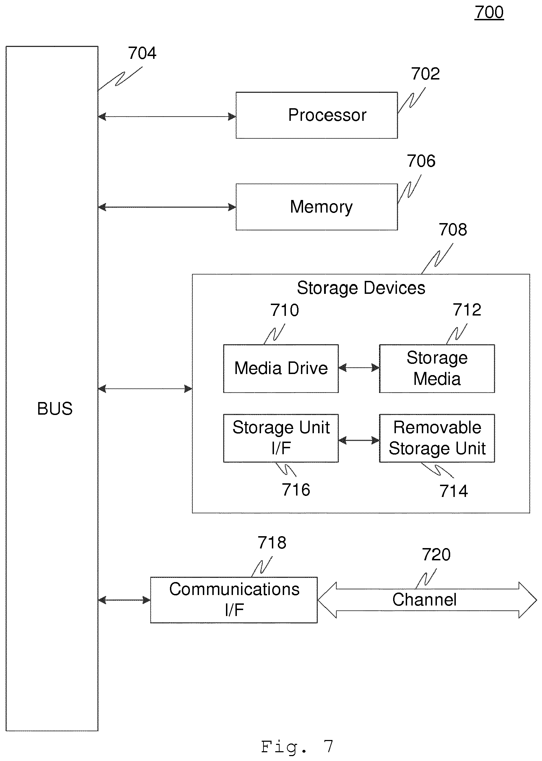

FIG. 7 illustrates an exemplary computing system 700 that may be employed to implement processing functionality for various embodiments (e.g., as a single instruction, multiple data (SIMD) device, client device, server device, one or more processors, or the like). Those skilled in the relevant art will also recognize how to implement embodiments of the invention using other computer systems or architectures. Computing system 700 may represent, for example, a user device such as a desktop, an activity monitoring device, a wearable portable electronic device, a mobile phone, personal entertainment device, digital video recorder (DVR), and so on, or any other type of special or general purpose computing device as may be desirable or appropriate for a given application or environment. Computing system 700 can include one or more processors, such as a processor 702 that can be implemented using a general or special purpose processing engine such as, for example, a microprocessor, microcontroller or other control logic. In this example, processor 702 is connected to a bus 704 or other communication medium.

Computing system 700 can also include a memory 706 (main memory), for example, Random Access Memory (RAM) or other dynamic memory, for storing information and instructions to be executed by processor 702. Memory 706 also may be used for storing temporary variables or other intermediate information during execution of instructions to be executed by processor 702. Computing system 700 may likewise include a read only memory (ROM) or other static storage device coupled to bus 704 for storing static information and instructions for processor 702.

Computing system 700 may also include storage devices 708, which may include, for example, a media drive 710 and a removable storage interface. The media drive 710 may include a drive or other mechanism to support fixed or removable storage media, such as a hard disk drive, a floppy disk drive, a magnetic tape drive, an SD card port, a USB port, a micro USB port, an optical disk drive, a CD or DVD drive (R or RW), or other removable or fixed media drive. A storage media 712 may include, for example, a hard disk, magnetic tape, flash drive, or other fixed or removable medium that is read by and written to by media drive 710. As these examples illustrate, storage media 712 may include a computer-readable storage medium having stored therein particular computer software or data.

In alternative embodiments, storage devices 708 may include other similar instrumentalities or means for allowing computer programs or other instructions or data to be loaded into computing system 700. Such instrumentalities may include, for example, a removable storage unit 714 and a storage unit interface 716, such as a program cartridge and cartridge interface, a removable memory (for example, a flash memory or other removable memory module) and memory slot, and other removable storage units and interfaces that allow software and data to be transferred from removable storage unit 714 to computing system 700.

Computing system 700 can also include a communications interface 718. Communications interface 718 can be used to allow software and data to be transferred between computing system 700 and external devices. Examples of communications interface 718 can include a network interface (such as an Ethernet or other network interface controller (NIC) card), a communications port (such as for example, a USB port, a micro USB port), Near field Communication (NFC), etc. Software and data transferred via communications interface 718 are in the form of signals which can be electronic, electromagnetic, optical, or other signals capable of being received by communications interface 718. These signals are provided to communications interface 718 via a channel 720. Channel 720 may carry signals and may be implemented using a wireless medium, wire or cable, fiber optics, or other communications medium. Some examples of channel 720 include a phone line, a cellular phone link, an RF link, a Bluetooth link, a network interface, a local or wide area network, and other communications channels.

In this document, the terms "computer program product" and "computer-readable medium" may be used generally to refer to media such as, for example, memory 706, storage devices 708, removable storage unit 714, or signal(s) on channel 720. These and other forms of computer-readable media may be involved in providing one or more sequences of one or more instructions to processor 702 for execution. Such instructions, generally referred to as "computer program code" (which may be grouped in the form of computer programs or other groupings), when executed, enable computing system 700 to perform features or functions of embodiments of the present invention.

In an embodiment where the elements are implemented using software, the software may be stored in a computer-readable medium and loaded into computing system 700 using, for example, removable storage unit 714, media drive 710 or communications interface 718. The control logic (in this example, software instructions or computer program code), when executed by processor 702, causes processor 702 to perform the functions of embodiments of the invention as described herein.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments disclose methods and systems for determining radio coverage in wireless communication networks. The coverage area of the BS is divided into multiple micro zones and macro zones and, as a result, signal measurement reports received from these micro and macro zones may help in accurate and efficient classification of a radio coverage map. These signal measurement reports include a combination of signal parameters, for example, of RSRP, HF, and RLF. As a result, the determination of radio coverage may be precise, thereby reducing error in creating the radio coverage map. Additionally, as for blind zones signal quality is predicted and then later verified, a holistic view of the coverage area may be provided, which otherwise would be left blank in other known methods and systems.

The specification has described methods and systems for determining radio coverage in wireless communication networks. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method, performed by a base station, for determining radio coverage in a wireless communication network, the method **characterized by**:

   categorizing (402; 506) each of a plurality of micro zones (340, 342, 344, 346, 348, 350) as one of a User Equipment micro zone and a blind micro zone (340) based on signal measurement reports associated with the plurality of micro zones, wherein each micro zone is a region within the coverage area (302) of a Base Station, and wherein a User Equipment micro zone is a micro zone for which at least one signal measurement report has been received and a blind micro zone is a micro zone for which a signal measurement report has not been received; and
   estimating (404; 514) signal quality of a blind micro zone (340) within the plurality of micro zones (340, 342, 344, 346, 348, 350) based on signal quality of at least one set of neighboring micro zones (342, 344, 346, 348, 350) surrounding the blind micro zone, wherein the signal quality of each set of neighboring micro zones is determined based on a predefined set of signal parameters extracted from corresponding signal measurement reports.

2. The method of claim 1, further comprising identifying (502) the plurality of micro zones (340, 342, 344, 346, 348, 350) based on transmission power of the Base Station and a number of sectors within the coverage area (302) of the Base Station, wherein the plurality of micro zones are of equal size, the plurality of micro zones tessellating to overlay at least a portion of the coverage area of the Base Station.

3. The method of claim 1 or claim 2, further comprising determining (510) signal quality of a User Equipment micro zone within the plurality of micro zones (340, 342, 344, 346, 348, 350) based on the predefined set of signal parameters extracted from a predefined threshold number of signal measurement reports received from the User Equipment micro zone.

4. The method of any one of claims 1 to 3, further comprising:

   collecting (504) signal measurement reports for a micro zone from at least one User Equipment in the micro zone; and
   computing (508) the predefined set of signal parameters for the micro zone based on the signal measurement reports of the micro zone and at least one configuration parameter.

5. The method of claim 4, wherein the at least one configuration parameter is selected from a group comprising a threshold number of signal measurement reports, a time duration for collecting signal measurement reports, a transmission power of the Base Station, a size of a micro zone, a signal quality factor of a micro zone, a good quality zone threshold, a bad quality zone threshold, a distance factor of a micro zone, and a number of sectors in the coverage area (302) of the Base Station.

6. The method of claim 4 or claim 5, wherein the predefined set of signal parameters comprise an average Handover Failure, an average Radio Link Failure, a Reference Signal Received Power, and an average signal strength.

7. The method of any one of claims 1 to 6, further comprising categorizing (512) the User Equipment micro zone as one of a good quality micro zone, a medium quality micro zone, and a bad quality micro zone based on a comparison of signal quality of the User Equipment micro zone with a good quality micro zone threshold and a bad quality micro zone threshold.

8. The method of any one of claims 1 to 7, wherein estimating (404; 516) the signal quality of the blind micro zone (340) comprises determining (602) a signal quality factor for a set of neighboring micro zones based on (i) an average Radio Link Failure and an average Handover Failure of the set of neighboring micro zones, and (ii) a comparison of signal quality deviation between actual signal quality of a User Equipment micro zone associated with a maximum number of signal measurement reports within the set of neighboring micro zones and an average estimated signal quality of the set of neighboring micro zones with a threshold deviation of the Base Station, the threshold deviation being determined based on signal strength of the Base Station.

9. The method of claim 8 further comprising predicting (604) the signal quality of the blind micro zone (340) comprising:

computing (604a) an average signal quality of the at least one set of neighboring micro zones (340, 342, 344, 346, 348, 350) based on (i) the average Radio Link Failure of a sector comprising the at least one set of neighboring micro zones, (ii) each of the average signal strength, the average Radio Link Failure, and the average Handover Failure of the at least one set of neighboring micro zones, and (iii) a signal quality factor determined for each of the at least one set of neighboring micro zones; and

categorizing (604b) the blind micro zone (340) as one of a good quality micro zone, a medium quality micro zone, and a bad quality micro zone based on the average signal quality of the at least one set of neighboring micro zones, a distance of the blind micro zone from the Base Station, a good quality micro zone threshold, and a bad quality micro zone threshold.

10. The method of claim 9, further comprising verifying (606) the signal quality predicted for the blind micro zone (340) with a threshold limit of signal error deviation.

11. The method of claim 10, further comprising performing a signal adjustment (610) for the blind micro zone (340), when the signal quality predicted for the blind micro zone is outside the threshold limit of signal error deviation.

12. The method of any one of claims 1 to 11, further comprising creating (518) a radio coverage map for the coverage area of the Base Station based on the signal quality determined for the User Equipment micro zone and the signal quality estimated for the blind micro zone.

13. The method of any one of claims 1 to 12, wherein the wireless communication network is a Long-Term Evolution wireless network.

14. A Base Station for a wireless communication network, the Base Station comprising a processor configured to perform the method of any one of claims 1 to 13.

15. A non-transitory computer-readable storage medium for determining radio coverage in a wireless communication network which when executed by a computing device causes the computing device to perform the method of any one of claims 1 to 13.

**Patentansprüche**

1. Verfahren, ausgeführt von einer Basisstation, zum Bestimmen von Funkabdeckung in einem drahtlosen Kommunikationsnetz, wobei das Verfahren **gekennzeichnet ist durch**:

Kategorisieren (402; 506) von jeder einer Mehrzahl von Mikrozonen (340, 342, 344, 346, 348, 350) als eine von einer Benutzerendgerät-Mikrozone und einer Blind-Mikrozone (340) auf Grundlage von Signalmessungsprotokollen, die der Mehrzahl von Mikrozonen zugehörig sind, wobei jede Mikrozone ein Gebiet in dem Abdeckungsbereich (302) einer Basisstation ist, und wobei eine Benutzerendgerät-Mikrozone eine Mikrozone ist, für die mindestens ein Signalmessungsprotokoll empfangen wurde, und eine Blind-Mikrozone eine Mikrozone ist, für die kein Signalmessungsprotokoll empfangen wurde; und

Schätzen (404; 514) einer Signalqualität einer Blind-Mikrozone (340) in der Mehrzahl von Mikrozonen (340, 342, 344, 346, 348, 350) auf Grundlage der Signalqualität von mindestens einer Gruppe von benachbarten Mikrozonen (342, 344, 346, 348, 350), die die Blind-Mikrozone umgeben, wobei die Signalqualität jeder Gruppe von benachbarten Mikrozonen auf Grundlage einer vordefinierten Gruppe von Signalparametern bestimmt wird, die aus entsprechenden Signalmessungsprotokollen extrahiert werden.

2. Verfahren nach Anspruch 1, ferner aufweisend ein Identifizieren (502) der Mehrzahl von Mikrozonen (340, 342, 344, 346, 348, 350) auf Grundlage einer Sendeleistung der Basisstation und einer Anzahl von Sektoren in dem Abdeckungsbereich (302) der Basisstation, wobei die Mehrzahl von Mikrozonen von gleicher Größe ist, wobei die Mehrzahl von Mikrozonen ein Mosaik bildet, um mindestens einen Abschnitt des Abdeckungsbereichs der Basisstation zu überlagern.

3. Verfahren nach Anspruch 1 oder Anspruch 2, ferner aufweisend ein Bestimmen (510) der Signalqualität einer Benutzerendgerät-Mikrozone in der Mehrzahl von Mikrozonen (340, 342, 344, 346, 348, 350) auf Grundlage der vordefinierten Gruppe von Signalparametern, die aus einer vordefinierten Schwellenwertanzahl von Signalmessungsprotokollen extrahiert wurden, die von der Benutzerendgerät-Mikrozone empfangen wurden.

4. Verfahren nach einem der Ansprüche 1 bis 3, ferner aufweisend:

Sammeln (504) von Signalmessungsprotokollen für eine Mikrozone von mindestens einem Benutzerendgerät in der Mikrozone; und
Berechnen (508) der vordefinierten Gruppe von Signalparametern für die Mikrozone auf Grundlage der Signalmessungsprotokolle der Mikrozone und mindestens einem Konfigurationsparameter.

5. Verfahren nach Anspruch 4, wobei der mindestens eine Konfigurationsparameter aus einer Gruppe ausgewählt wird, die eine Schwellenwertanzahl von Signalmessungsprotokollen, eine Zeitdauer für ein Sammeln von Signalmessungsprotokollen, eine Sendeleistung der Basisstation, eine Größe einer Mikrozone, einen Signalqualitätsfaktor einer Mikrozone, einen Schwellenwert für eine Zone mit guter Qualität, einen Schwellenwert für eine Zone mit schlechter Qualität, einen Distanzfaktor einer Mikrozone und eine Anzahl von Sektoren in dem Abdeckungsbereich (302) der Basisstation aufweist.

6. Verfahren nach Anspruch 4 oder Anspruch 5, wobei die vordefinierte Gruppe von Signalparametern einen durchschnittlichen Leitungsübergabefehler, einen durchschnittlichen Funkverbindungsfehler, eine Referenzsignalempfangsleistung und eine durchschnittliche Signalstärke aufweist.

7. Verfahren nach einem der Ansprüche 1 bis 6, ferner aufweisend ein Kategorisieren (512) der Benutzerendgerät-Mikrozone als eine Mikrozone mit guter Qualität, eine Mikrozone mit mittlerer Qualität und eine Mikrozone mit schlechter Qualität auf Grundlage eines Vergleichs der Signalqualität der Benutzerendgerät-Mikrozone mit einem Mikrozonen-Schwellenwert für gute Qualität und einem Mikrozonen-Schwellenwert für schlechte Qualität.

8. Verfahren nach einem der Ansprüche 1 bis 7, wobei das Schätzen (404; 516) der Signalqualität der Blind-Mikrozone (340) ein Bestimmen (602) eines Signalqualitätsfaktors für eine Gruppe von benachbarten Mikrozonen aufweist auf Grundlage von (i) einem durchschnittlichen Funkverbindungsfehler und einem durchschnittlichen Leitungsübergabefehler der Gruppe von benachbarten Mikrozonen, und (ii) eines Vergleichs der Signalqualitätsabweichung zwischen einer Ist-Signalqualität einer Benutzerendgerät-Mikrozone, die einer maximalen Anzahl von Signalmessungsprotokollen in der Gruppe von benachbarten Mikrozonen zugehörig ist, und einer durchschnittlichen geschätzten Signalqualität der Gruppe von benachbarten Mikrozonen mit einer Schwellenwertabweichung der Basisstation, wobei die Schwellenwertabweichung auf Grundlage der Signalstärke der Basisstation bestimmt wird.

9. Verfahren nach Anspruch 8, ferner aufweisend ein Vorhersagen (604) der Signalqualität der Blind-Mikrozone (340), aufweisend:

Berechnen (604a) einer durchschnittlichen Signalqualität der mindestens einen Gruppe von benachbarten Mikrozonen (340, 342, 344, 346, 348, 350) auf Grundlage (i) des durchschnittlichen Funkverbindungsfehlers eines Sektors, der die mindestens eine Gruppe von benachbarten Mikrozonen aufweist, (ii) von jeweils der durchschnittlichen Signalstärke, des durchschnittlichen Funkverbindungsfehlers und des durchschnittlichen Leitungsübergabefehlers der mindestens einen Gruppe von benachbarten Mikrozonen, und (iii) eines Signalqualitätsfaktors, der für jede der mindestens einen Gruppe von benachbarten Mikrozonen bestimmt wird; und
Kategorisieren (604b) der Blind-Mikrozone (340) als eine Mikrozone mit guter Qualität, eine Mikrozone mit mittlerer Qualität und eine Mikrozone mit schlechter Qualität auf Grundlage der durchschnittlichen Signalqualität der mindestens einen Gruppe von benachbarten Mikrozonen, einer Distanz der Blind-Mikrozone von der Basisstation, eines Mikrozonen-Schwellenwerts für gute Qualität und eines Mikrozonen-Schwellenwerts für schlechte Qualität.

**10.** Verfahren nach Anspruch 9, ferner aufweisend ein Überprüfen (606) der vorhergesagten Signalqualität der Blind-Mikrozone (340) mit einem Schwellenwert-Grenzwert der Signalfehlerabweichung.

**11.** Verfahren nach Anspruch 10, ferner aufweisend ein Ausführen einer Signalanpassung (610) für die Blind-Mikrozone (340), wenn die für die Blind-Mikrozone vorhergesagte Signalqualität außerhalb des Schwellenwert-Grenzwerts der Signalfehlerabweichung liegt.

**12.** Verfahren nach einem der Ansprüche 1 bis 11, ferner aufweisend ein Erstellen (518) einer Funkabdeckungskarte für den Abdeckungsbereich der Basisstation auf Grundlage der Signalqualität, die für die Benutzerendgerät-Mikrozone bestimmt wurde, und der für die Blind-Mikrozone geschätzten Signalqualität.

**13.** Verfahren nach einem der Ansprüche 1 bis 12, wobei das drahtlose Kommunikationsnetz ein Long- Term-Evolution-Funknetz ist.

**14.** Basisstation für ein drahtloses Kommunikationsnetz, wobei die Basisstation einen Prozessor aufweist, der konfiguriert ist, um das Verfahren nach einem der Ansprüche 1 bis 13 auszuführen.

**15.** Nicht-transitorisches computerlesbares Speichermedium zum Bestimmen der Funkabdeckung in einem drahtlosen Kommunikationsnetz, das beim Ausführen durch eine Datenverarbeitungseinheit das Ausführen des Verfahrens nach einem der Ansprüche 1 bis 13 veranlasst.

**Revendications**

**1.** Procédé, exécuté par une station de base, permettant de déterminer la couverture radio dans un réseau de communication sans fil, ledit procédé étant **caractérisé par** :

la classification par catégories (402 ; 506) de chacune d'une pluralité de micro zones (340, 342, 344, 346, 348, 350) en tant que l'une d'une micro zone d'équipement d'utilisateur et d'une micro zone morte (340) sur la base des rapports de mesure de signal associés à la pluralité de micro zones, chaque micro zone étant une région à l'intérieur de la zone de couverture (302) d'une station de base et une micro zone d'équipement d'utilisateur étant une micro zone pour laquelle au moins un rapport de mesure de signal a été reçu et une micro zone morte étant une micro zone pour laquelle un rapport de mesure de signal n'a pas été reçu ; et
l'estimation (404 ; 514) de la qualité de signal d'une micro zone morte (340) à l'intérieur de la pluralité de micro zones (340, 342, 344, 346, 348, 350) sur la base d'une qualité de signal d'au moins un ensemble de micro zones avoisinantes (342, 344, 346, 348, 350) entourant la micro zone morte, ladite qualité de signal de chaque ensemble de micro zones avoisinantes étant déterminée sur la base d'un ensemble prédéfini de paramètres de signal extraits des rapports de mesure de signal correspondants.

**2.** Procédé selon la revendication 1, comprenant en outre l'identification (502) de la pluralité de micro zones (340, 342, 344, 346, 348, 350) sur la base d'une puissance d'émission de la station de base et d'un certain nombre de secteurs à l'intérieur de la zone de couverture (302) de la station de base, ladite pluralité de micro zones étant de taille égale, la pluralité de micro zones pavant au moins une partie de la zone de couverture de la station de base afin de la recouvrir.

**3.** Procédé selon la revendication 1 ou 2, comprenant en outre la détermination (510) de la qualité de signal d'une micro zone d'équipement d'utilisateur à l'intérieur de la pluralité de micro zones (340, 342, 344, 346, 348, 350) sur la base de l'ensemble prédéfini de paramètres de signal extraits d'un nombre seuil prédéfini de rapports de mesure de signal provenant de la micro zone d'équipement d'utilisateur.

**4.** Procédé selon l'une quelconque des revendications 1 à 3, comprenant en outre :

la récupération (504) des rapports de mesure de signal pour une micro zone depuis au moins un équipement d'utilisateur dans la micro zone ; et

le calcul (508) de l'ensemble prédéfini de paramètres de signal pour la micro zone sur la base des rapports de mesure de signal de la micro zone et d'au moins un paramètre de configuration.

5. Procédé selon la revendication 4, ledit au moins un paramètre de configuration étant choisi dans un groupe constitué par : un nombre seuil de rapports de mesure de signal, une durée de temps pour la collecte de rapports de mesure de signal, une puissance d'émission de la station de base, une taille d'une micro zone, un facteur de qualité de signal d'une micro zone, un seuil de zone de bonne qualité, un seuil de zone de mauvaise qualité, un facteur de distance d'une micro zone et un nombre de secteurs dans la zone de couverture (302) de la station de base.

6. Procédé selon la revendication 4 ou 5, ledit ensemble prédéfini de paramètres de signal comprenant un échec de transfert moyen, un échec de liaison radio moyen, une puissance reçue de signal de référence et une intensité de signal moyenne.

7. Procédé selon l'une quelconque des revendications 1 à 6, comprenant en outre la classification par catégories (512) de la micro zone d'équipement d'utilisateur en tant que l'une d'une micro zone de bonne qualité, d'une micro zone de qualité moyenne et d'une micro zone de mauvaise qualité sur la base sur d'une comparaison de qualité de signal de la micro zone d'équipement d'utilisateur avec un seuil de micro zone de bonne qualité et un seuil de micro zone de mauvaise qualité.

8. Procédé selon l'une quelconque des revendications 1 à 7, ladite estimation (404 ; 516) de la qualité de signal de la micro zone morte (340) comprenant la détermination (602) d'un facteur de qualité de signal pour un ensemble de micro zones avoisinantes sur la base (i) d'un échec de liaison radio moyen et d'un échec de transfert moyen de l'ensemble de micro zones avoisinantes et (ii) d'une comparaison de déviation de qualité de signal entre une qualité de signal réel d'une micro zone d'équipement d'utilisateur associée à un nombre maximal de rapports de mesure de signal à l'intérieur de l'ensemble de micro zones avoisinantes et une qualité de signal estimée moyenne de l'ensemble des micro zones avoisinantes avec une déviation seuil de la station de base, ladite déviation seuil étant déterminée sur la base d'une intensité de signal de la station de base.

9. Procédé selon la revendication 8 comprenant en outre la prédiction (604) de la qualité de signal de la micro zone morte (340) comprenant :

le calcul (604a) d'une qualité de signal moyenne de l'au moins un ensemble de micro zones avoisinantes (340, 342, 344, 346, 348, 350) sur la base de (i) l'échec de liaison radio moyen d'un secteur comprenant l'au moins un ensemble de micro zones avoisinantes, (ii) chacun de l'intensité de signal moyenne, de l'échec de liaison radio moyen et de l'échec de transfert moyen de l'au moins un ensemble de micro zones avoisinantes et (iii) un facteur de qualité de signal déterminé pour ledit au moins un ensemble ou chacun des ensembles de micro zones avoisinantes ; et
la classification par catégories (604b) de la micro zone morte (340) en tant que l'une d'une micro zone de bonne qualité, d'une micro zone de qualité moyenne et d'une micro zone de mauvaise qualité, sur la base de la qualité de signal moyenne de l'au moins un ensemble de micro zones avoisinantes, d'une distance de la micro zone morte depuis la station de base, d'un seuil de micro zone de bonne qualité et d'un seuil de micro zone de mauvaise qualité.

10. Procédé selon la revendication 9, comprenant en outre la vérification (606) de la qualité de signal prédite pour la micro zone morte (340) avec une limite seuil de déviation d'erreur de signal.

11. Procédé selon la revendication 10, comprenant outre la réalisation d'un réglage de signal (610) pour la micro zone morte (340), lorsque la qualité de signal prédite pour la micro zone morte est en dehors de la limite seuil de déviation d'erreur de signal.

12. Procédé selon l'une quelconque des revendications 1 à 11, comprenant en outre la création (518) d'une carte de couverture radio pour la zone de couverture de la station de base sur la base de la qualité de signal déterminée pour la micro zone d'équipement d'utilisateur et de la qualité de signal estimée pour la micro zone morte.

13. Procédé selon l'une quelconque des revendications 1 à 12, ledit réseau de communication sans fil étant un réseau sans fil d'évolution à long terme.

14. Station de base pour un réseau de communication sans fil, ladite Station de base comprenant un processeur configuré pour exécuter le procédé selon l'une quelconque des revendications 1 à 13.

15. Support de stockage lisible par ordinateur non transitoire permettant de déterminer la couverture radio dans un réseau de communication sans fil qui, lorsqu'il est exécuté par un dispositif informatique, amène ledit dispositif informatique à exécuter le procédé selon l'une quelconque des revendications 1 à 13.

Fig. 1

Fig. 2

Fig. 3

Categorize each of a plurality of micro zones within coverage area of a Base Station (BS) as one of a User Equipment (UE) micro zone and a blind micro zone

402

Estimate signal quality of a blind micro zone within the plurality of micro zones

404

Fig. 4

502

Identify a plurality of micro zones of equal size

504

Collect signal measurement reports for a micro zone from at least one User Equipment (UE) in the micro zone

506

Categorize each of a plurality of micro zones within coverage area of a Base Station (BS) as one of a UE micro zone and a blind micro zone

508

Compute a predefined set of signal parameters for each of the plurality of micro zones based on the signal measurement reports of the micro zone and at least one configuration parameter

510

Determine signal quality of a UE micro zone within the plurality of micro zones

512

Categorize the UE micro zone as one of good quality micro zone, medium quality micro zone, and bad quality micro zone

514

Estimate signal quality of a blind micro zone within the plurality of micro zones

516

Categorize the blind micro zone as one of good quality micro zone, medium quality micro zone, and bad quality micro zone

518

Create a radio coverage map for the coverage area of the BS based on the signal quality determined for the UE micro zone and the signal quality estimated for the blind micro zone

Fig. 5

602 — Determine a signal quality factor for a set of neighboring micro zones surrounding a blind micro zone

Predict the signal quality of the blind micro zone

604a — Compute an average signal quality of the at least one set of neighboring micro zones surrounding the blind zone

604

604b — Categorize the blind micro zone as one of good quality micro zone, medium quality micro zone, and bad quality micro zone

606 — Whether signal quality predicted for the blind zone is within threshold limit of signal error deviation?

Yes

608 — Consider signal quality predicted for the blind micro zone as final predicted signal quality

No

610 — Adjust the signal strength in response to verification

Fig. 6

_700_

704

702

Processor

706

Memory

708

Storage Devices

710                                              712

Media Drive  ◄──►  Storage Media

BUS

Storage Unit I/F  ◄──►  Removable Storage Unit

716                                              714

718                                              720

Communications I/F  ◄──►  Channel

Fig. 7

**REFERENCES CITED IN THE DESCRIPTION**

**Patent documents cited in the description**

• GB 2406472 A